Europäisches Patentamt

(19) European Patent Office

Office européen des brevets

(11) EP 0 790 096 A1

(12) EUROPEAN PATENT APPLICATION

(43) Date of publication:
20.08.1997 Bulletin 1997/34

(51) Int. Cl.$^6$: B23D 61/02

(21) Application number: 96111191.1

(22) Date of filing: 11.07.1996

(84) Designated Contracting States:
CH DE ES FR GB IT LI

(30) Priority: 14.02.1996 JP 26539/96

(71) Applicant: TSUNE WAGNER CARBIDE CO., LTD.
Nei-gun, Toyama-ken (JP)

(72) Inventor: Nozaki, Hiroshi,
Tsune Wagner Carbide Co., Ltd.
Nei-gun, Toyama-ken (JP)

(74) Representative: Füchsle, Klaus, Dipl.-Ing. et al
Hoffmann Eitle,
Patent- und Rechtsanwälte,
Arabellastrasse 4
81925 München (DE)

(54) Circular saw

(57) Disclosed herein is a circular saw comprising a blade (B) in the form of a disc, which has recesses (8) formed at regular intervals in its periphery, and a tip (A) fixed to each of the recesses. The tip has a first rake face (1) and a second rake face (2) both on its leading side for contact with a work piece. The first rake face borders the second rake face, and is positioned outward from it. The first rake face has a width S1 between 0.15 and 0.25 mm. This makes it possible to manufacture a circular saw which lowers the cutting resistance and reduces the generation of heat.

FIG.4

## Description

BACKGROUND OF THE INVENTION AND RELATED ART STATEMENT

The present invention relates to a circular saw for cutting steel material at high speed. Conventionally, iron- based material has been cut by metal saws made of high speed steel, segmental saws, band saws, etc. These saws, however, are low in cutting speed and working or operating efficiency. Therefore, it has recently been proposed to cut steel material by means of circular saws with cemented carbide tips, and some of the saws have been used.

Each of the circular saws includes a blade in the form of a disc having a proper number of teeth, which project from its periphery. Each of the teeth has an L-shaped cutout formed in its leading or front end, to which a cemented carbide tip is fixed.

Japanese Patent Second (after exam.) Publication H.6- 20,663 discloses a circular saw for cutting steel material at high speed. This saw includes a disclike blade having a number of seats formed in its periphery. A generally trapezoidal tip of sintered hard alloy is fixed to each of the seats.

Explanation is made below of the leading side of the tip, which impinges on or contacts with a work piece. The leading side has a first cutting or rake face at its outer end, which is very narrow and a little inclined. The first face borders a second rake face, which is wide and little inclined. The second face terminates in a step to a higher face or stage.

The first face is a small chamfer at the outer leading end, and plays the most important part in cutting a work piece. If the first face were a sharp cutting edge, its cutting ability would be highest, but it would be broken. Sintered hard alloy is undoubtedly far harder than general metal such as iron, but accordingly brittle or fragile. The sharper the edge is, the more easily it is broken by a shock. The first face is the outer leading end slightly chamfered so as to be prevented from easily breaking. The first face has a width S1 and an inclination $\gamma1$, which strongly influence the cutting ability. Here, the inclination $\gamma1$ is defined as the angle between the first face and the radial plane of the blade which extends via the borderline between the first and second faces. The inclination $\gamma1$ is defined as positive if the first face inclines forward (in the cutting direction). Because the first face is a chamfer, the inclination $\gamma1$ is always negative.

Thin shavings slip or slide on the second face away from the work piece. The second face has a width S2 and an inclination $\gamma2$, which are parameters determining the tip shape. The inclination $\gamma2$ is similarly defined as the angle between the second face and the radial plane. The inclination $\gamma2$ is a positive number near 0. The width S2 is a constant determining the size, has (a) considerable degree of freedom, and is therefore not limited.

The tip step curls or curves the shavings forward so that they are rolled up. The width and inclination of the step are other parameters, which do not much influence the cutting performance. An inner end portion of the thicker part of the tip is inserted into and fixed to a recess in the blade.

The trailing or rear side of the tip engages with the blade recess. The outer side of the tip is an inclined flank between the leading and trailing sides. The flank is the first part which contacts with the shaved or newly exposed surface of the work piece being cut. The cutting performance is also influenced by the inclination between the flank and the plane which is tangent to the blade periphery at the outer edge of the first face. This inclination may be referred to as a clearance angle or relief angle. The inner side of the tip engages with the bottom of the blade recess. The tip shape can thus be defined or determined by the angles, widths, etc. of the first face, second face, step, stage, and flank.

What, in addition to the tip, contributes to the cutting is the tooth bottom immediately forward from the tip. The bottom is an arcuate face, which is curved largely inward so as to roll up further forward into arcs the shavings raised by the tip step. The front end of the arcuate bottom face merges into the linear or traight back face of the preceding tooth. The back face terminates in a portion which bears the rear side of the preceding tip. A gullet is defined by the chord between the outer ends of adjacent tips, and by the second face, step, tooth bottom and back face which are located between the tips.

The gullet functions or operates to further roll up the arcuate shavings into vortexes or eddies, which each have one or more turns. The coiled shavings are then removed centrifugally from the gullet. The gullet shape and size are other important factors. How can the gullet shape be evaluated? It could be defined by the distance d between the line interconnecting the outer ends of adjacent tips and the tooth bottom between the tips. The optimum depth d, however, changes with the size. Therefore, the gullet shape is defined by the quotient d/P of the division of the depth d by the tooth pitch P.

In the above Publication H.6-20,663, the parameters of the circular saw are preferred to range as follows.

1. The angular difference $\gamma2 - \gamma1$ between the first and second faces should be 25 or more degrees ($\gamma2 - \gamma1 \geqq 25°$).
2. The width S1 of the first face should range between 0.3 and 0.5 mm.
3. The ratio d/P of the tooth bottom depth d to the tooth pitch P should range between 30 and 40 %.

In the above Publication H.6-20,663, reasons or bases for these constants are given as follows.

[S1] Conventionally, the width S1 of the first face ranged between 1.0 and 2.0 mm. Consequently, the length of contact between the first face and a shaving is so long that the resistance is high. By shortening this contact length, it should be possible to reduce the cutting resistance. Therefore, the width S1 should be 0.3 through 0.5 mm, which are 1/3 through 1/2 of the conventional values.

[$\gamma$1] Conventionally, the rake (angle) $\gamma$1 of the first face ranged between about -15° and -18°. In this range, the resistance is high and the cutting generates a large amount of heat. Therefore, the negative inclination should be larger to reduce the cutting resistance. The first face inclination is preferred smaller than -20° ($\gamma$1 < -20°).

[$\gamma$2] The rake of the second face is a positive value. This is defined with the radial face being 0. This rake is preferred to be a small positive value. If this rake were negative, shavings might be held up and might not be well coiled. Therefore, the value must be about +10° and at least +5°.

[d/P] The gullet depth is represented by the value d. The optimum value of d depends on the overall size of the saw. Therefore, the depth is normalized by the pitch P, which represents the circular saw size, and d/P represents the tooth bottom depth. The gullet needs a certain depth so that the shavings raised by the tip step slide smoothly on the tooth bottom and are coiled. If the gullet is too deep, however, it is difficult for the coiled shavings to move out of the gullet. Therefore, the value d/P should be 30 through 40 %.

By way of example, for a circular saw having a diameter D of 360mm and teeth which are 60 in number (Z), optimum values may be as follows.

$$S1 = 0.45mm$$

$$\gamma1 = -15°$$

$$\gamma2 = +15°$$

$$\gamma2 - \gamma1 = +30°$$

$$P = 18.84mm$$

$$d = 6.59mm$$

$$d/P = 44\%$$

The circumference of the circular saw is $\pi$D. The pitch P is the quotient of the division of the circumference $\pi$D by the number Z of teeth (P = $\pi$D/Z).

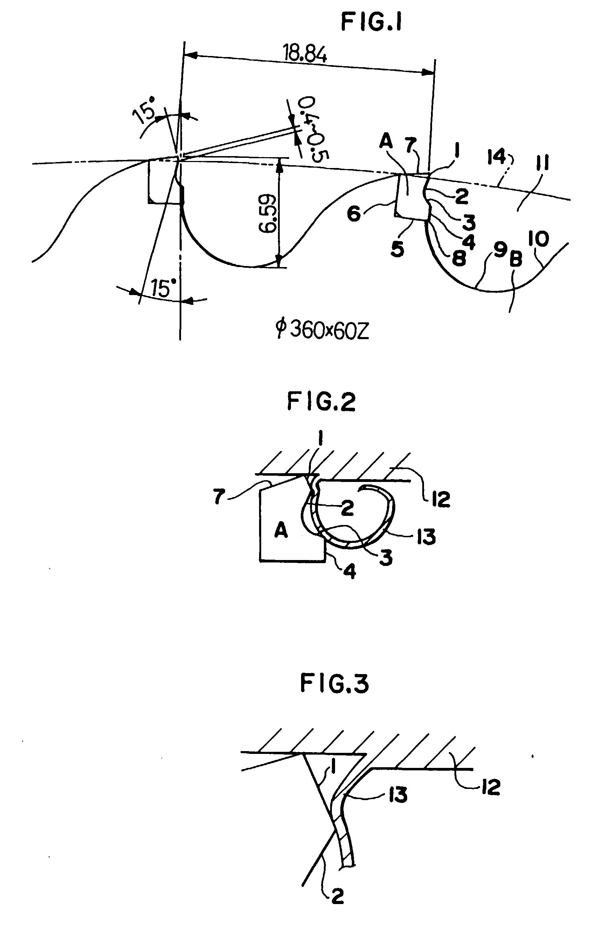

Fig. 1 of the accompanying drawings shows teeth of a circular saw numerically with the parameters most preferred in the above Publication H.6-20,663. Each of the teeth carries a tip A having surfaces such as a first rake face 1, a second rake face 2, a step 3, a stage 4, a bottom face 5, a rear face 6 and a flank 7. The tip A is fixed to a mounting recess 8 in the blade B. The blade B has, between adjacent teeth, a tooth bottom 9 curved largely downward and a tooth back 10 preceding the bottom. The bottom 9, back 10 and pitch circle 14 surround or define a gullet 11.

$\gamma$2 - $\gamma$1 is the supplementary angle of the crossed axes angle between the first and second faces. The crossed axes angle itself is obtuse, while its supplementary angle is acute. If $\gamma$2 - $\gamma$1 is larger, the obtuse crossed axes angle is acuter.

The circular saw introduced as prior art is excellent, but still has some faults or disadvantages. One of the faults is bad shaving flow, and another is high cutting resistance. This is explained below with reference to Figs. 2 and 3, which show the tip function or operation when a work piece 12 is cut by the circular saw according to the prior art.

In Figs. 2 and 3, the first face 1 cuts and raises surface part 13 of the piece 12. The thin shaving 13 starts to contact with the first face 1 midway on the face, and crosses over the corner between the first face 1 and second face 2. The rake or inclination $\gamma$1 of the first face 1 is -15°. The rake $\gamma$2 of the second face 2 is +15°. Accordingly, the corner angle is 150°. The shaving 13 does not soon or immediately contact with the second face 2, but moves spatially over the face 2 for a while, and contacts with the tip step 3, where it starts to be coiled.

Because the first face 1 is too wide and the inclination $\gamma$1 is -15°, the angle between it and the shaving is large, so that the contact resistance is high. The tip cuts the work piece surface against the high resistance. The large width S1 of the first face increases the product of the multiplication of the frictional force by the distance (frictional force x distance). The product is the work done by the frictional force on the tip. Because the work by the frictional force is all converted into heat, a large amount of heat is generated. The heat deteriorates the tip. The heat and friction rapidly wear the tip faces 1 and 2.

## SUMMARY OF THE INVENTION

In view of the above problems, it is an object of the present invention to provide a circular saw which can lower the cutting resistance between a work piece and the outer leading ends of the saw tips.

It is another object of the invention to provide circular saw tips which can restrain the generation of heat by lowering the cutting resistance.

It is a further object of the invention to provide a circular saw which can lengthen its life by reducing the generation of heat and frictional resistance.

## BRIEF DESCRIPTION OF THE DRAWINGS

A preferred embodiment of the present invention is described below in detail with reference to the accompanying drawings, wherein:

Fig. 1 is an enlarged fragmentary side view of the conventional circular saw, showing the saw shape and preferred sizes;

Fig. 2 is an enlarged side view of a tip of the conventional saw, showing how the tip cuts a surface of a work piece, which is illustrated in section, and how a shaving is formed;

Fig. 3 is an enlarged view of part of Fig. 2, showing the interaction of the first rake face at the outer front end of the tip and the shaving, to explain that the cutting resistance is increased by the high frictional resistance between the first face and the shaving;

Fig. 4 is a fragmentary side view of a circular saw according to the embodiment of the invention;

Fig. 5 is a view similar to Fig. 4, but showing sizes preferred for the embodiment;

Fig. 6 is a fragmentary side view of a tip of the saw according to the invention, showing how the tip cuts a work piece, which is illustrated in section, and how a shaving is coiled;

Fig. 7 is an enlarged view of part of Fig. 6, for explaining that the shaving first contacts with the second rake face, which has a positive rake, so that the friction is less and the cutting resistance is lower.

## DETAILED DESCRIPTION OF RELATED ART AND OF PREFERRED EMBODIMENT OF THE INVENTION

According to the present invention, the first rake face of each tip of the circular saw has a width S1 between 0.15 and 0.25 mm, and the difference $\gamma2 - \gamma1$ of the subtraction of the rake $\gamma1$ of the first rake face from the rake $\gamma2$ of the second rake face ranges between 20° and 24°. Further, the quotient d/P of the division of the tooth bottom depth d by the tooth pitch P ranges between 42 and 46 %. In comparison with the prior art, the values differ as follows.

|  | Present Invention | Publication H.6-20,663 |
|---|---|---|
| $\gamma2 - \gamma1$ | 20° through 24° | 25° or more |
| S1 | 0.15 through 0.25 mm | 0.3 through 0.5 mm |
| d/P | 42 through 46 % | 30 through 40 % |

The value $\gamma2 - \gamma1$ is smaller than that of the prior art. The obtuse crossed axes angle between the first and second rake faces is nearer to the straight angle (180°). The corner is more obtuse, so that the frictional resistance is lower. The width S1 is smaller than that of the prior art, thereby lowering the resistance of contact between the first rake face and a shaving. These values cooperate to lower the cutting resistance and restrain the generation of heat. The tooth bottom is deeper than that of the prior art. This enlarges the volume of the gullet for coiling and storing shavings.

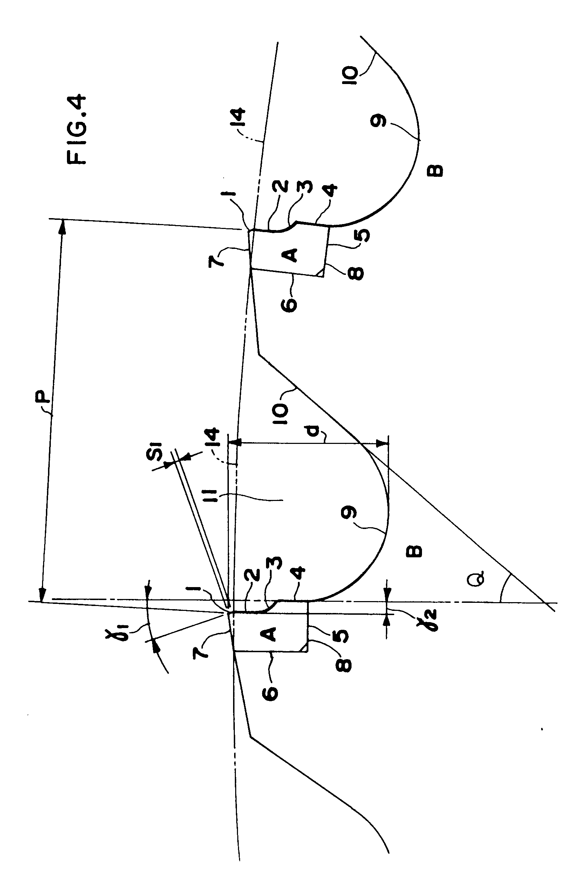

Fig. 4 shows teeth with tips of the circular saw according to the embodiment of the invention. Each tip A is a hard member of cemented carbide or sintered hard alloy, and may be made of WC. It is preferable to coat the outer leading end of each tooth with TiC, TiN or the like.

The circular saw includes a disclike blade B having a number of recesses 8 formed in its periphery. Each tip A is fixed to one of the recesses 8. The tip A is generally square or rectangular, and has a first rake face 1 at its outer leading end, which borders a second rake face 2. Referred to as the first rake (angle) γ1 is the inclination of the first face 1 relative to the radial plane of the blade B which extends via the borderline between the first and second faces. Referred to as the second rake γ2 is the inclination of the second face 2 relative to the radial plane. The second face 2 terminates in a step 3 for curving or turning shavings forward. A higher face or stage 4 extends from the step 3 axially of the blade B.

A bottom face 5 extends from the stage 4 at a right angle with it, and a rear face 6 extends from the bottom face 5. The bottom face 5 and rear face 6 of the tip are fixed to the recess 8. A flank 7 extends between the rear face 6 and the first face 1. The clearance angle or relief angle should preferably range between 7.0° and 10.0°.

Forward from each recess 8 extends an arcuate or curved tooth bottom 9, which merges into the back 10 of the preceding tooth. The back 10 may be either an inclined straight surface or a curved surface. The extension from the back 10 crosses that from the second face 2 of the succeeding tip at an angle Q, which should preferably be 35° or more. The bottom 9 is arcuate to make shavings well spiral on it. The blade diameter D starts from or ends at the outer end of the recess 8. The pitch circle extends via this end. If the number of teeth is Z, the pitch P is πD/Z, which is the circumferential distance between the outer ends of adjacent recesses 8. The distance between the pitch circle and tooth bottom 9 is referred to as the depth d. According to the invention, the depth p is about 5 % deeper than that of the prior art. The value d/P ranges between 42 and 46 %. The consequently enlarged gullet 11 increases the volume for coiling and holding shavings.

These characteristics or features make it possible to produce a circular saw which lowers the cutting resistance and reduces the generation of heat.

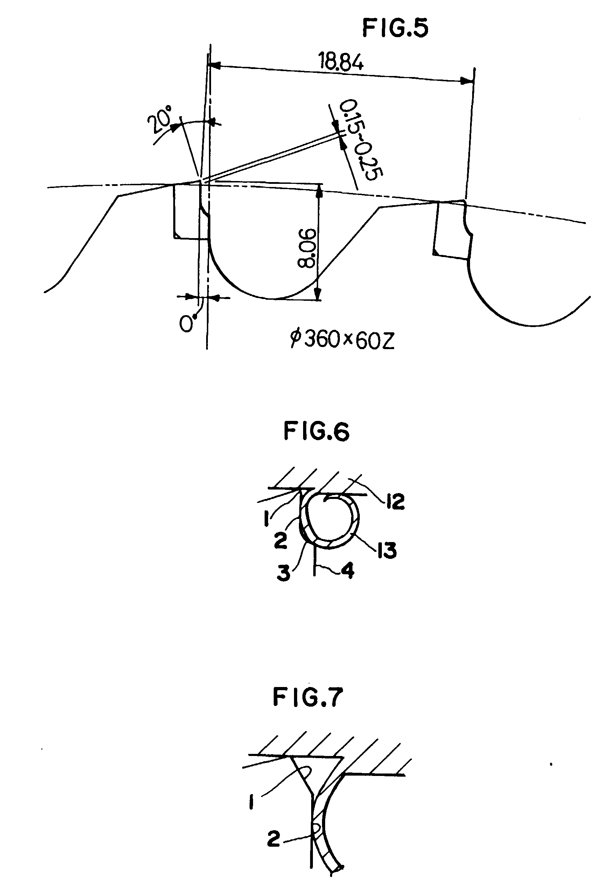

Fig. 5 shows preferred values for the invention. Fig. 5 represents the circular saw of the same size as Fig. 1. The saw has a diameter D of 360 mm, 60 teeth and a pitch P of 18.84 mm. As written in Fig. 5, the tip parameters include the first face width S1 between 0.15 and 0.25 mm, first face rake γ1 of -20°, second face rake γ2 of 0° and tooth depth d of 8.06 mm. The value d/P is 43 %.

It was possible for this circular saw to cut an iron- based material having an outer diameter between 10 and 100 mm at a high speed between 50 and 170 meters/minute.

Figs. 6 and 7 show how a work piece is cut by the circular saw of the invention. The second face 2, not the first face 1, cuts or tears thin shavings from a surface of the work piece 12. After a shaving 13 leaves the body of the piece 12, it contacts directly with the second face 2, not with the first face 1, because the first face is sufficiently narrow (S1 = 0.15 through 0.25 mm).

If a shaving first contacted with the first face 1 (refer to Fig. 3), the resistance would be high because this face has a negative rake. According to the invention, as clearly shown in Fig. 7, a shaving does not first contact with the first face 1, but first hits on the second face 2. Because the second face rake γ2 is positive or zero, the second face 2 does not prevent the shaving from sliding or moving inside. Because the rake γ2 is not negative, the resistance is low, so that the shaving can smoothly slide inside the gullet. This is the most remarkable advantage of the invention. The shaving is curled by the step 3, then turned back in the gullet 11 and deformed spirally. The shaving thus coiled fills the gullet 11.

Eventually, according to the invention, the cutting resistance is lower and the generation of heat is less. The invention makes it possible to cut a harder and thicker work piece in a shorter time; nevertheless the tip life is longer.

**Claims**

1. A circular saw comprising a blade in the form of a disc, which has recesses formed at regular intervals in the periphery of said blade, and a tip fixed to each of said recesses, said tip having a first rake face and a second rake face both on the leading side for contact with a work piece, said first rake face bordering on and being positioned outward from said second rake face, said first rake face having a width S1 between 0.15 and 0.25 mm.

2. A circular saw comprising a blade in the form of a disc, which has recesses formed at regular intervals in the periphery of said blade, and a tip fixed to each of said recesses, said tip having a first rake face and a second rake face both on the leading side for contact with a work piece, said first rake face bordering on and being positioned outward from said second rake face, said first rake face having a width S1 between 0.15 and 0.25 mm, said first rake face further having a negative rake γ1, said second rake face having a rake γ2, the difference γ2 - γ1 between said rakes ranging between 20° and 24°.

3. A circular saw comprising a blade in the form of a disc, which has recesses formed at regular intervals in the periphery of said blade, and a tip fixed to each of said recesses, said tip having a first rake face and a second rake face both on the leading side for contact with a work piece, said first rake face bordering on and being positioned outward from said second rake face, said first rake face having a width S1 between 0.15 and 0.25 mm, said first rake face further having a negative rake γ1, said second rake face having a rake γ2, the difference γ2 - γ1 between said rakes ranging between 20° and 24°, said blade having teeth, in each of which one of said recesses is formed, the tooth bottom in front of each of said recesses having a depth d, said circular saw having a tip pitch P, the ratio d/P of said depth d to said pitch P ranging between 42 and 46 %.

# FIG.1

18.84

15°

0.4~0.5

6.59

15°

A 7 1 14 11

6

5 2 3 4 8 9 B 10

$\phi\,360\times60Z$

# FIG.2

1

7

A 2 12

4 3 13

# FIG.3

1

13 12

2

FIG.4

FIG.5

18.84

20°

0.15~0.25

8.06

0°

$\phi 360 \times 60Z$

FIG.6

1
2
3
4
12
13

FIG.7

1
2

# EP 0 790 096 A1

**European Patent Office**    **EUROPEAN SEARCH REPORT**

Application Number

EP 96 11 1191

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 012 820 A (ROBERT H. NOWAK) <br> * column 4, line 3 - line 58; figures 3A-3D * | 1-3 | B23D61/02 |
| A,D | PATENT ABSTRACTS OF JAPAN <br> vol. 12, no. 160 (M-697), 14 May 1988 <br> & JP 62 277216 A (KANEFUSA HAMONO KOGYO KK), 2 December 1987, <br> * abstract * | 1-3 | |
| A | EP 0 286 797 A (GUSTAV WAGNER MASCHINENFABRIK GMBH & CO. KG) <br> * claims 1-16; figures 2,3,13,14 * | 1,3 | |
| A | FR 2 231 463 A (CENTRO-METALCUT AB.) <br> * the whole document * | 1-3 | |

TECHNICAL FIELDS
SEARCHED (Int.Cl.6)

B23D
B27B

The present search report has been drawn up for all claims

| Place of search | Date of completion of the search | Examiner |
|---|---|---|
| BERLIN | 6 May 1997 | Cuny, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10